# EUROPEAN PATENT APPLICATION

(11) **EP 2 006 942 A2**
(43) Date of publication of application: **24.12.2008**
(21) Application number: 07715162.9
(22) Date of filing: 02.03.2007
(51) Int. Cl.: H01M 4/70, H01M 4/04, H01M 10/40

(54) **SECONDARY BATTERY, MANUFACTURING METHOD THEREOF AND SYSTEM THEREOF**

(30) Priority: 02.03.2006 JP 2006057030
(71) Applicant: Incorporated National University Iwate University, Morioka-shi, Iwate 020-8550 (JP)
(72) Inventor: BABA, Mamoru, Morioka-shi, Iwate 0208550 (JP)
(74) Representative: Dr. Weitzel & Partner
(86) International application number: PCT/JP2007/054068
(87) International publication number: WO 2007/102433

(57) **Abstract**

The invention provides a secondary battery that has good adhesion between a thin substrate and an active material, is thinner and lighter in weight, has flexibility, and has excellent charge/discharge characteristics, and a method of manufacturing the secondary battery.

The secondary battery includes a cell having, in order, a positive electrode active material layer, an electrolyte layer, and a negative electrode active material layer, or a cell having, in order, a negative electrode active material layer, an electrolyte layer, and a positive electrode active material layer, wherein the cell is formed on a conductive thin substrate having a surface roughness RMS of 0.8 µm or less.

## Description

### Technical Field

The present invention relates to secondary batteries, a method of manufacturing the secondary batteries, and systems thereof; and more particularly, to thinner and smaller secondary batteries, a method of manufacturing the secondary batteries, and systems thereof.

### Background Art

Patent Document 1: JP H07-142054 A
Patent Document 2: JP H08-241707 A
Patent Document 3: JP H08-222272 A
Patent Document 4: JP H04-68390 B

As electronic and electric devices have decreased in size and weight, there is a strong demand also for secondary batteries to decrease in size and weight.
As techniques for reducing the size and weight of secondary batteries, Patent Documents 1 and 2 disclose techniques in which a metal foil such as stainless steel is used as a substrate, and a positive electrode active material and a solid electrolyte layer are formed on the substrate.

In Patent Document 1, a thin film of niobium pentoxide with a thickness of 300 to 600 nm is formed as a positive electrode active material on a substrate of stainless steel foil (SUS 304; thickness: 0.05 mm) by puttering (Paragraph No. 0022).

In Patent Document 2, a thin film of vanadium pentoxide with a thickness of 380 nm is formed on a SUS 304 stainless steel foil (Paragraph No. 0013).
On the other hand, with regard to a technique for increasing the adhesion between a metal foil and an active material, Patent Document 3 describes in Paragraph No. 0008 as follows: "Examples of the positive electrode collector used in the invention include metal sheets, metal foils, metal meshes, punching metals, and expanded metals, and meshes and unwoven fabrics made of metal plated fibers, metal evaporated wires, metal-containing synthetic fibers, and the like of stainless steel, gold, platinum, nickel, aluminum, molybdenum, titanium, and the like. Among the above, aluminum and stainless steel are particularly preferably used in consideration of electrical conductivity, chemical and electrochemical stability, economical efficiency, workability, and the like. More preferably, aluminum is used because of its light weight and electrochemical stability. It is preferable that the positive electrode collector layer and negative electrode collector layer used in the invention have roughened surfaces. The application of surface roughening increases the contact area of the active material layers, and also improves the adhesion, thereby lowering the impedance of the battery. Moreover, when the electrodes are prepared using coating solutions, the application of surface roughening can significantly improve the adhesion between each active material and each collector. The surface roughening can be performed by polishing with emery paper, blasting, or chemical or electrochemical etching, and the collectors can be surface-roughened using these methods. More specifically, blasting is preferably performed for stainless steel, and etching is preferably performed for aluminum to give etched aluminum. Since aluminum is a soft metal, blasting cannot effectively roughen the aluminum surface, causing aluminum itself to deform. In contrast, etching can effectively roughen the aluminum surface within the range of micrometers, without causing aluminum to deform or significantly reducing the strength thereof; hence it is the most preferable method of roughening the surface of aluminum."

None of the techniques disclosed in the above-described patent documents, however, necessarily provides good adhesion between a metal foil and an active material.
The film formation technique according to the roll-to-roll method is disclosed in JP H04-68390 B.

### Disclosure of the Invention

### Problems to be Solved by the Invention

An object of the present invention is to provide a secondary battery that has good adhesion between a thin substrate and an active material, is thinner and lighter in weight, and has excellent charge/discharge characteristics, and a method of manufacturing the secondary battery.

### Means for Solving the Problems

The invention according to claim 1 is a secondary battery comprising a cell comprising, in order, a positive electrode active material layer, an electrolyte layer, and a negative electrode active material layer, or a cell comprising, in order, a negative electrode active material layer, an electrolyte layer, and a positive electrode active material layer; wherein the cell is formed on a conductive thin substrate having a surface roughness RMS of 0.8 µm or less.
The invention according to claim 2 is the secondary battery as defined in claim 1, wherein the surface roughness RMS of the thin substrate is from 0.1 to 0.5 µm.
The invention according to claim 3 is the secondary battery as defined in claim 1 or 2, wherein the thin substrate is a foil made of a metal or an alloy.
The invention according to claim 4 is the secondary battery as defined in claim 1 or 2, wherein the thin substrate is a conductive film in which an organic film is coated with a thin film of a conductive metal on both surfaces thereof.
The invention according to claim 5 is the secondary battery as defined in any one of claims 1 to 4, wherein the thin substrate is a substrate not containing any oxide on a surface thereof.
The invention according to claim 6 is the secondary battery as defined in any one of claims 1 to 5, wherein the thin substrate has thereon 5,000/mm² or less of deposits with a diameter of 0.15 µm or more.
The invention according to claim 7 is the secondary battery as defined in any one of claims 1 to 6, wherein the electrolyte layer is made of a solid electrolyte.
The invention according to claim 8 is the secondary battery as defined in claim 3, wherein the alloy is stainless steel.
The invention according to claim 9 is the secondary battery as defined in any one of claims 1 to 8, wherein a portion or all of each of the layers is formed by a vacuum film-formation method.
The invention according to claim 10 is the secondary battery as defined in any one of claims 1 to 9, wherein one or a plurality of cells are present on both surfaces of the thin substrate.
The invention according to claim 11 is the secondary battery as defined in any one of claims 1 to 10, wherein the plurality of cells are stacked in series so that a negative electrode active material layer of one cell is in contact with a positive electrode active material layer of another cell.
The invention according to claim 12 is the secondary battery as defined in claim 10, wherein a collector electrode is interposed between the plurality of cells.
The invention according to claim 13 is the secondary battery as defined in claim 10 or 11, wherein no collector electrode is interposed between the plurality of cells.
The invention according to claim 14 is a secondary battery system comprising secondary batteries as defined in any one of claims 1 to 13 stacked in parallel.
The invention according to claim 15 is a secondary battery system comprising secondary batteries as defined in any one of claims 1 to 13 stacked in series.
The invention according to claim 16 is the secondary battery system as defined in claim 14, further comprising a collector at least as an uppermost layer thereof, wherein a lead or leads are drawn out only from the thin substrate, or only from the thin substrate and the collector as an uppermost layer.
The invention according to claim 17 is the secondary battery system as defined in claim 15, further comprising a collector at least as an uppermost layer thereof, wherein leads are drawn out only from the thin substrate as a lowermost layer and the collector as an uppermost layer.
The invention according to claim 18 is the secondary battery system as defined in any one of claims 14 to 17, wherein an electrical contact between the thin substrate and the uppermost layer of each secondary battery is ensured via (1) a direct physical contact, (2) a conductive paste applied on one opposed surface or both surfaces thereof, or (3) a conductive sheet.
The invention according to claim 19 is a method of manufacturing a secondary battery comprising forming a positive electrode active material layer, an electrolyte layer, and a negative electrode active material layer in order, or a negative electrode active material layer, an electrolyte layer, and a positive electrode active material layer in order, on a conductive thin substrate having a surface roughness RMS of 0.8 µm or less. The invention according to claim 20 is the method as defined in claim 19, wherein the surface roughness RMS of the thin substrate is from 0.1 to 0.5 µm.
The invention according to claim 21 is the method as defined in claim 19 or 20, wherein the thin substrate is a foil made of a metal or an alloy.
The invention according to claim 22 is the method as defined in claim 19 or 20, wherein the thin substrate is a conductive film in which an organic film is coated with a thin film of a conductive metal on both surfaces thereof.
The invention according to claim 23 is the method as defined in any one of claims 19 to 22, wherein any passivation film is removed from a surface of the thin substrate prior to formation of the layers.
The invention according to claim 24 is the method as defined in any one of claims 19 to 23, wherein the thin substrate has thereon 5,000/mm² or less of deposits with a diameter of 0.15 µm or more.
The invention according to claim 25 is the method as defined in any one of claims 19 to 24, wherein the electrolyte layer is made of a solid electrolyte.
The invention according to claim 26 is the method as defined in claim 21, wherein the alloy is stainless steel.
The invention according to claim 27 is the method as defined in any one of claims 19 to 26, wherein a portion or all of each of the layers is formed by a vacuum film-formation method.
The invention according to claim 28 is the method as defined in claim 27, wherein each layer is formed on both surfaces of the thin substrate.
The invention according to claim 29 is the method as defined in any one of claims 19 to 28, wherein each layer is formed while multiple slices of the thin substrate cut into a desired shape are being delivered continuously or intermittently in a belt-conveyor manner.
The invention according to claim 30 is the method as defined in any one of claims 19 to 28, wherein each layer is formed while the thin substrate wound into a roll is being delivered continuously or intermittently by roll-to-roll processing.
The invention according to claim 31 is the method as defined in any one of claims 19 to 28, wherein each layer is formed simultaneously on both surfaces of the thin substrate while the thin substrate wound into a roll is being delivered continuously or intermittently by roll-to-roll processing.

It has been recommended that the surface roughness of a foil be coarse to provide good adhesion between the foil and an active material (Patent Document 3). We thus conducted actual experiments, but the results obtained were not necessarily favorable.

For this reason, we conducted various experiments, and consequently found that, contrary to the teaching of Patent Document 3, the adhesion between a foil and an active material can be improved by polishing the surface of a foil to a mirror surface, also leading to excellent charge/discharge characteristics.

### Effects of the Invention

The present invention provides a secondary battery that has an improved adhesion between a conductive thin substrate such as a metal foil or the like and an active material, is thinner and lighter in weight, has flexibility, and exhibits excellent charge/discharge characteristics, and a method of manufacturing the secondary battery.

### Brief Description of the Drawings

FIG. 1 is a schematic diagram showing the structures of secondary batteries and a system thereof according to an embodiment of the invention (secondary batteries of the type having a single cell on one surface).
FIG. 2 is a schematic diagram showing the structures of secondary batteries and a system thereof according to an embodiment of the invention (secondary batteries of the type having a plurality of cells on one surface without any collector therebetween).
FIG. 3 is a schematic diagram showing the structures of secondary batteries and a system thereof according to an embodiment of the invention (secondary batteries of the type having a plurality of cells on one surface with a collector electrode therebetween).
FIG. 4 is a schematic diagram showing a system in which single-sided secondary batteries according to an embodiment of the invention are stacked in parallel.
FIG. 5 is a schematic diagram showing the structures of secondary batteries and a system thereof according to an embodiment of the invention (secondary batteries of the type having a single cell on both surfaces).
FIG. 6 is a schematic diagram showing the structures of secondary batteries and a system thereof according to an embodiment of the invention (secondary batteries of the type having a plurality of cells on both surfaces without any collector electrode between the cells).
FIG. 7 is a schematic diagram showing the structures of secondary batteries and a system thereof according to an embodiment of the invention (secondary batteries of the type having a plurality of cells on both surfaces with a collector electrode between the cells).
FIG. 8 is a schematic diagram showing a system in which double-sided secondary batteries according to an embodiment of the invention are stacked in parallel.
FIG. 9 is a schematic diagram showing a system in which single-sided secondary batteries according to an embodiment are stacked in series.
FIG. 10 (a) is a cross-sectional view showing a secondary battery according to Example 1 of the invention; and FIG. 10 (b) is a graph showing the charge/discharge characteristics of the secondary batteries.
FIG. 11 (a) is a cross-sectional view showing a secondary battery according to Example 2 of the invention; and FIG. 11 (b) is a graph showing the charge/discharge characteristics of the secondary batteries.
FIG. 12 (a) is a cross-sectional view showing a secondary battery according to Example 3 of the invention; and FIG. 12 (b) is a graph showing the charge/discharge characteristics of the secondary batteries.
FIG. 13 shows a photograph of a sample of a single-sided secondary battery prepared in connection with Example 4 of the invention.
FIG. 14 (a) is a cross-sectional view showing a secondary battery according to Example 4 of the invention; FIG. 14 (b) is a graph showing the charge/discharge characteristics of the secondary batteries; and FIG. 14 (c) is a graph showing the cycle characteristics of the secondary batteries.

### Explanation of Reference Numerals

1, 13: foil
2, 14: negative electrode active material layer
3, 15: electrolyte layer
4, 16: positive electrode active material layer
5a, 5b, 17: current collector electrode
6a, 11: negative cell
6b: positive cell
7A, 7B: secondary battery

### Best Mode for Carrying Out the Invention

### (Substrate Materials and Foils)

Examples of the conductive thin substrate used in the invention include metal sheets, metal foils, metal meshes, punching metals, and expanded metals, and meshes and unwoven fabrics made of metal plated fibers, metal evaporated wires, metal-containing synthetic fibers, and the like of stainless steel, gold, platinum, nickel, aluminum, molybdenum, titanium, and the like. Among the above, aluminum and stainless steel are particularly preferably used in consideration of electrical conductivity, chemical and electrochemical stability, economical efficiency, workability, and the like.

SUS 304, SUS 316, and SUS 316 L are preferable as stainless steel. The compositions of these types of stainless steel are as follows. The unit % represents % by weight.
SUS 304: C: 0.08% or less; Si: 1.00% or less; Mn: 2.00% or less; P: 0.045% or less; S: 0.03% or less; Ni: 8.0 to 10.5%; Cr: 18.0 to 20.0%.
SUS 316: C: 0.08% or less; Si: 1.0% or less; Mn: 2.0% or less; P: 0.045% or less; S: 0.03% or less; Ni: 10.0 to 14.0%; Cr: 16.0 to 18.0%

The thickness of the conductive thin substrate is preferably from 5 to 100 µm. When the thickness is 5 µm or more, the conductive thin substrate will be easy to handle, and when the thickness is 100 µm or less, a higher flexibility can be obtained. More preferably, the thickness is from 5 to 50 µm.
In the invention, the surface roughness RMS of the conductive thin substrate is 0.8 µm or less. More preferably, the RMS is from 0.1 to 0.5 µm. When the RMS is within this range of values, the adhesion can be abruptly improved.

Any native oxide film (passivation film) formed on the surface of the conductive thin substrate is preferably removed by etching prior to formation of an active material on the conductive thin substrate. This can reduce the contact resistance. Etching can be performed by dry etching in a vacuum film-formation apparatus to continuously perform etching and film formation.
It was also found that deposits on the surface of the thin substrate (such as, for example, Cr23C6 and the like for SUS 316 and SUS 304) affect the adhesion. In particular, if deposites with a diameter of 0.15 µm or more are present in an amount of 5,000/mm² or more, the adhesion will be lowered. Moreover, the tension applied during processing of the thin substrate may cause a stress concentration, resulting in a breakage of the substrate. In particular, the presence of deposits with a diameter of 15 µm or more deteriorates the adhesion.
The size and amount of deposits can be controlled during the formation of a thin substrate by controlling the composition of the thin substrate and the heat treatment conditions. The composition is preferably controlled so that C is 0.05% or less, and more preferably 0.01% or less. In addition, the proportion of Cr is preferably set to about the minimum value as defined in the JIS standard. The amount and size of deposits can also be controlled by changing the solution treatment temperature or the cooling speed after processing.

Films can be continuously formed by providing a band-like continuous substrate as the conductive thin substrate, and transporting the substrate within a vacuum film-formation chamber continuously or intermittently by roll-to-roll processing. The term "roll-to-roll processing" as used herein refers to a method in which a thin substrate is continuously transported between at least two rolls, and, while the substrate is being transported, thin films are formed on the surface of the thin substrate by plasma CVD, sputtering, evaporation, or the like.
The thin substrate may be made of a foil of any of the above-mentioned metals or an alloy thereof, or may be made of a conductive film in which an organic film is coated with a thin film of a conductive metal on both surfaces thereof. When a conductive thin film is formed on the surfaces of an organic resin film, the organic resin film may be transported within a vacuum film-formation chamber continuously or intermittently by roll-to-roll processing to form a conductive film in the vacuum chamber by, for example, sputtering. In this way, all the steps can be performed by a dry process using roll-to-roll processing.

### (Positive Electrode Active Material)

Thin films made of the following materials can be used as the positive electrode active material: transition metal oxides such as TiS₂, MoS₂, Co₂S₅, V₂O₅, MnO₂, CoO₂, and the like, transition metal chalcogen compounds, and composites thereof with Li (Li composite oxides: LiMnO₂, LiMn₂O₄, LiCoO₂, and LiNiO₂); polymers of organic materials obtained by heating, i.e., one-dimensional graphitized products, carbon fluoride, graphite, and conductive polymers with electrical conductivities of 10⁻² S/cm or more; and more specifically, polymers such as polyaniline, polypyrrole, polyazulene, polyphenylene, polyacethylene, polyacene, polyphthalocyanine, poly-3-methylthiophene, polypyridine, polydiphenylbenzidine, and the like, derivatives thereof, and niobium pentoxide.
Sputtering is preferably used in forming such a thin film directly on the thin substrate. The thickness of the thin film is preferably from 2,000 to 8,000 nm to provide an effective intercalation depth for deintercalation and intercalation of Li ions into the active material layer.

### (Negative Electrode Active Material)

Thin films made of the following materials can be used as the negative electrode active material: carbon materials that can store and release lithium ions such as graphite, cokes, fired products of polymers, and the like, metal lithium, alloys of lithium and other metal(s), metal oxides such as TiO₂, Nb₂O₅, SnO₂, Fe₂O₃, SiO₂, and the like, metal sulfide pitch cokes, fired products of synthetic and natural polymers, pre-lithiated vanadium pentoxide, niobium pentoxide, tungsten trioxide, and molybdenum trioxide.
Sputtering is preferably used in forming such a thin film directly on the thin substrate. The thickness of the thin film is preferably from 2,000 to 8,000 nm to provide an effective intercalation depth for deintercalation and intercalation of Li ions into the active material layer.

### (Electrolyte Layer)

A solid electrolyte is preferably used as a material of the electrolyte layer.
The material of the solid electrolyte is not particularly limited as long as it can form a thin film and allows lithium to migrate freely. A thin film of the solid electrolyte can be formed using a method such as sputtering, electron beam evaporation, thermal evaporation, spin coating, or the like.

For example, lithium phosphate (Li3PO4) with good lithium-ion conductivity, a material obtained by adding nitrogen to lithium phosphate (LiPON), or the like can be used. The electrolyte layer 40 preferably has a thickness with which the formation of pin-holes can be reduced, and which is as small as possible, i.e., from about 0.1 to about 1 µm.
The thickness is particularly preferably 0.5 µm or less to provide a high ionic conductivity. The thickness is more preferably 0.3 µm or less.

### (Structural Examples of Secondary Batteries and Systems)

A plurality of secondary batteries of the present invention can be combined and used as a large voltage/current power source.

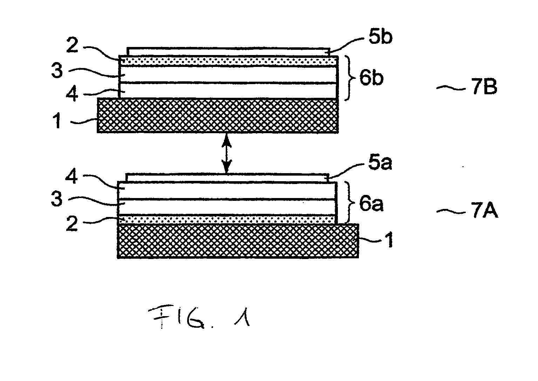

FIG. 1 shows basic structures of cells.
Reference numeral 7B denotes a secondary battery having a positive cell 6b formed on a foil 1. The positive cell 6b includes a positive electrode active material layer 4, an electrolyte layer 3, and a negative electrode active material layer 2 in order formed on the foil 1. In this example, a collector electrode 5b is formed as an outermost layer (on the negative electrode active material layer 2) of the positive cell 6b.

The secondary battery 7B may be prepared by forming on a foil 1 a positive electrode active material layer 4, an electrolyte layer 3, a negative electrode active material layer 2, and a collector electrode 5b. These layers may be formed in order using a vacuum film-formation apparatus.

In FIG. 1, reference numeral 7A denotes a secondary battery having a negative cell 6a on a foil 1. The negative cell 6a includes a negative electrode active material layer 2, an electrolyte layer 3, and a positive electrode active material layer 4 in order formed on the foil 1. In this example, a collector electrode 5a is formed as an outermost layer (on the positive electrode active material layer 4) of the negative cell 6a.

In FIG. 1, the secondary battery 7B may be stacked onto the secondary battery 7A to constitute a parallel secondary battery system. More specifically, the secondary batteries 7A and 7B are stacked onto each other by bringing the collector electrode 5a as the outermost layer of the secondary battery 7A into electrical contact with the rear surface of the foil 1 of the secondary battery 7B. The electrical contact between the two batteries may be ensured via (1) a direct physical contact, (2) a conductive paste applied on one opposed surface or both surfaces thereof, or (3) a conductive sheet.

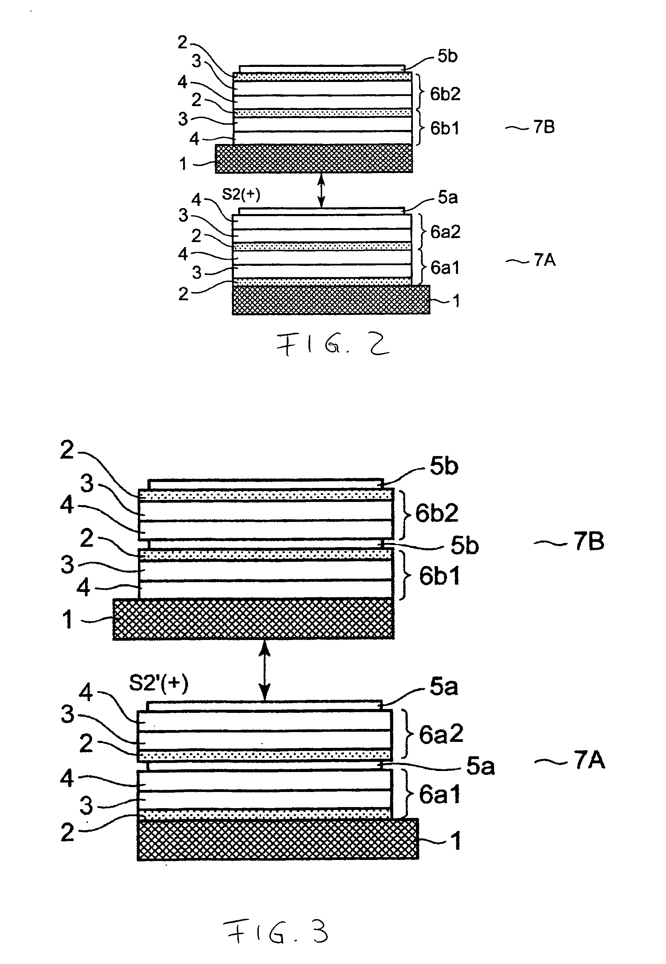

Referring to FIG. 2, a secondary battery 7A includes two positive cells 6b1, 6b2 formed in series on a foil 1. No collector electrode is interposed between the positive cells 6b1, 6b2.

Likewise, a secondary battery unit 7A includes two negative cells 6a1, 6a2 formed in series on a foil 1.

The structure is otherwise the same as that shown in FIG. 1, and the secondary battery 7B is stacked onto the secondary battery 7A to constitute a secondary battery system.

In the example shown in FIG. 3, a collector electrode 5b is interposed between positive cells 6b1 and 6b2, and a collector electrode 5a is interposed between negative cells 6a1 and 6a2. The structure is otherwise the same as that of the example shown in FIG. 2.

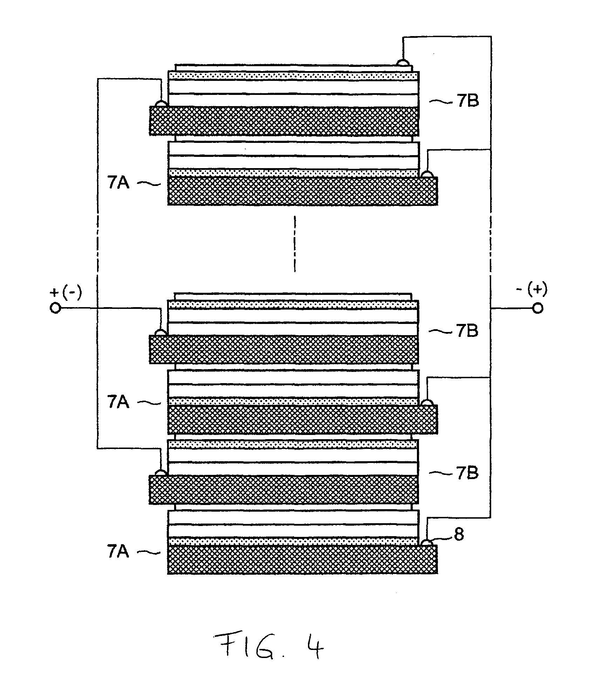

In the example shown in FIG. 4, secondary batteries 7A and 7B as shown in FIG. 1 are alternately stacked onto each other in parallel to constitute a system. The width of each foil 1 is greater than the width of each cell, and a terminal 8 is formed on the portion that protrudes from the width of each cell. Each secondary battery 7A and each secondary battery 7B are connected to each other via the terminal 8.
Constituting a system by alternately stacking secondary batteries in parallel enables the battery capacity to increase without enlarging the area of the secondary batteries. In addition, because a foil made of a metal or an alloy has a high thermal conductivity, stacking a plurality of such foils as shown in FIG. 4 can improve the heat dissipation efficiency of the secondary battery system, thereby preventing the batteries from overheating in producing a large current for a long period of time.

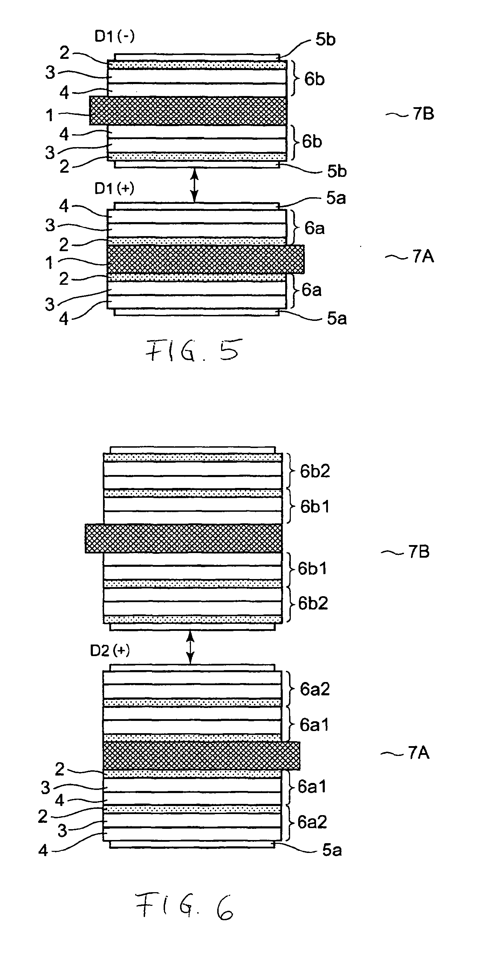

FIG. 5 is an example in which a cell is formed on both surfaces of each foil 1.
In a secondary battery 7A, negative cells 6a are symmetrically formed on both surfaces of a foil 1. Likewise, in a secondary battery 7B, positive cells 6b are symmetrically formed on both surfaces of a foil 1. A collector electrode 5a (5b) is formed as an outermost layer of each cell.

The secondary battery 7B is stacked onto the secondary battery 7A by bringing the collector electrode 5a into contact with the collector electrode 5b to thereby constitute a system.

FIG. 6 also shows an example in which cells are formed on both surfaces of each foil 1. FIG. 6 differs from FIG. 5 in that two cells are formed in series. Note that a collector electrode is not interposed between the two cells.
The structure is otherwise the same as that of the example shown in FIG. 5.

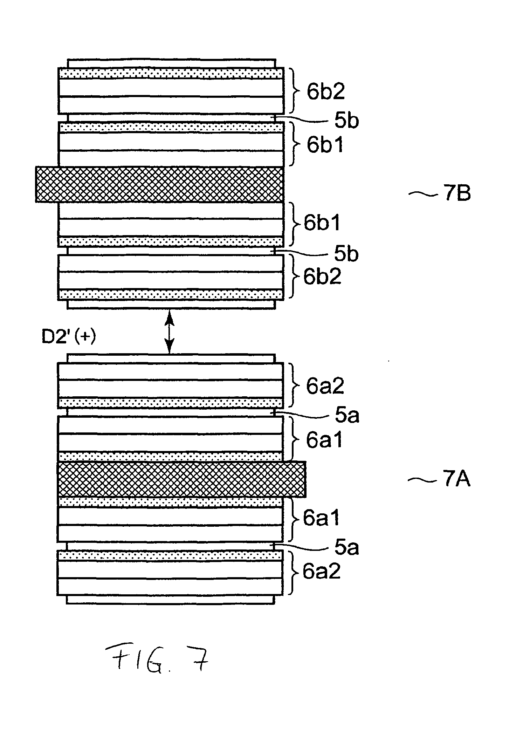

FIG. 7 also shows an example in which cells are formed on both surfaces of each foil 1.
FIG. 7 differs from FIG. 6 in that a collector electrode 5a (5b) is interposed between the two cells.
The structure is otherwise the same as that of the example shown in FIG. 6.

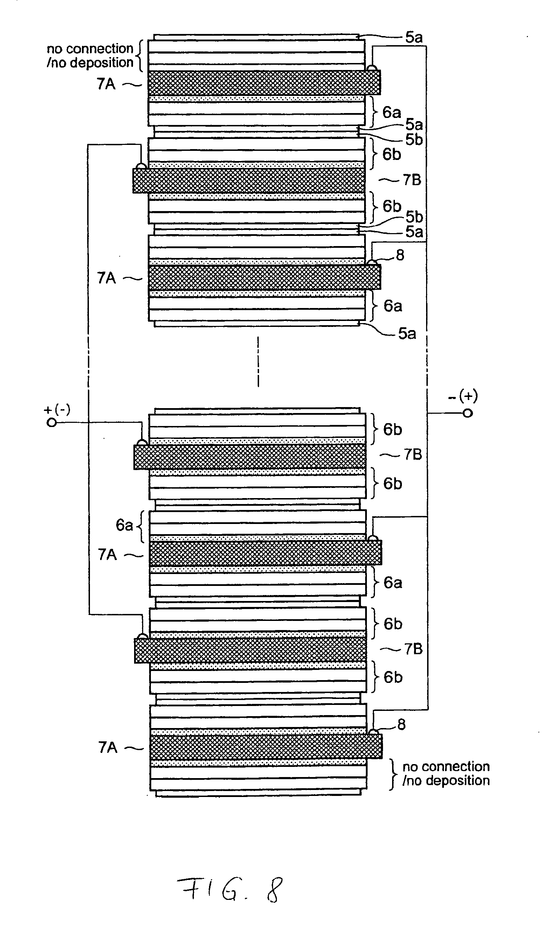

FIG. 8 shows a system constituted by alternately stacking secondary batteries 7A and 7B as shown in FIG. 5 in parallel.

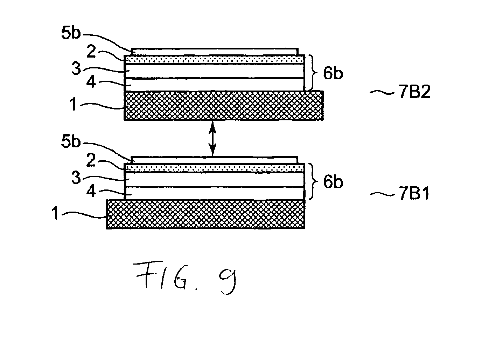

FIG. 9 shows an example of a system constituted by stacking secondary batteries 7B having a positive cell 6b as shown in FIG. 1 onto each other in series.
In this example, the secondary batteries 7B1, 7B2 are stacked onto each other in series by bringing the surface of the collector electrode 5b of the secondary battery 7B1 into contact with the rear surface of the foil 1 of the secondary battery 7B2.
Note that secondary batteries having a negative cell can also constitute a system in the same manner, and the secondary batteries shown in FIGS. 2 to 8 can also constitute a system in the same manner.

### [Example 1]

A secondary battery of the present invention was fabricated, and the charge/discharge characteristics thereof were evaluated. A stainless steel foil (SUS 304, thickness: 20 µm; size: 5 x 5 cm; surface roughness RMS: 0,5 µm) was prepared first as a thin substrate and introduced into a vacuum film-formation chamber. After plasma-etching a surface of the foil, each layer was formed as follows.

### [Positive Electrode Active Material Layer]

Material: lithium manganate (Li₂₋ₓMn₂O₄); RF sputtering, target: lithium manganate (purity: 99%), RF power: 100 W; Ar gas pressure: 1.2 Pa; Ar gas flow rate: 50 sccm; film thickness: 4,000 nm (0.4 µm)

### [Solid Electrolyte Layer]

Material: lithium phosphate (Li₃PO₄); RF sputtering, target: lithium phosphate (purity: 99%); RF power: 100 W; N₂ gas pressure: 1.2 Pa; N₂ gas flow rate: 50 sccm; film thickness: 4,000 nm (0.4 µm)

### [Negative Electrode Active Material Layer]

Material: vanadium pentoxide (V₂O₅); RF sputtering, target: vanadium pentoxide (purity: 99.9%); RF power: 100 W; Ar/O₂ gas pressure: 1.2 Pa; Ar/O₂ gas flow rate: 45/5 sccm; film thickness: 2,000 nm (0.2 µm)

### [Collector Layer]

Material: vanadium (V); direct current sputtering, target: vanadium (purity: 99.9%); RF power: 60 W; Ar gas pressure: 1.2 Pa; Ar gas flow rate: 50 sccm; film thickness: 1,600 nm (0.16 µm)
Three types of secondary batteries fabricated under the above-described conditions were measured for their charge/discharge characteristics.

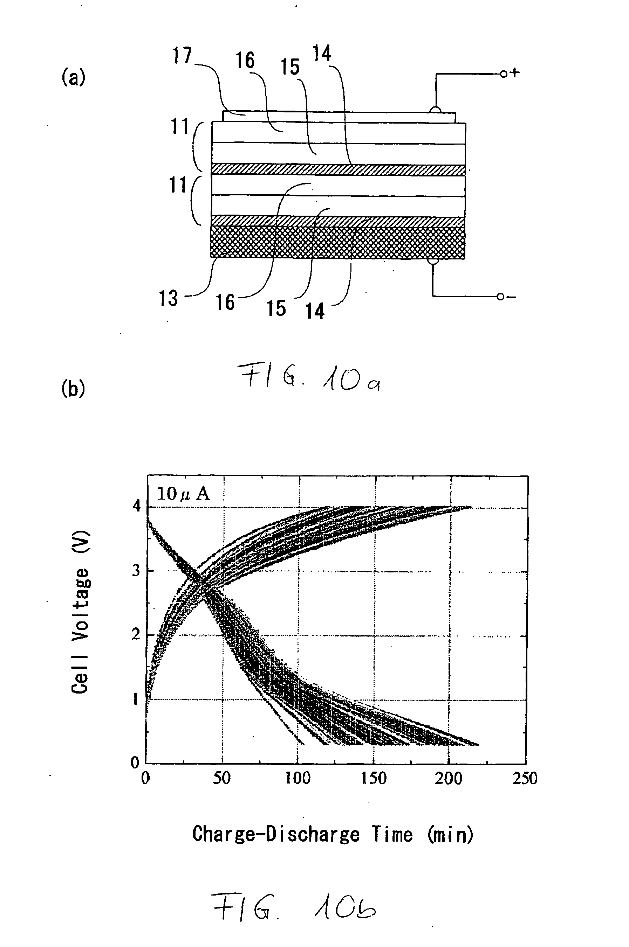

FIG. 10 (a) is a cross-sectional view of a secondary battery according to Example 1 of the invention; and FIG. 10 (b) is a graph showing the charge/discharge characteristics of the secondary batteries. In the secondary battery according to Example 1, two layers of cells are stacked in series on one side of the thin substrate.

### [Example 2]

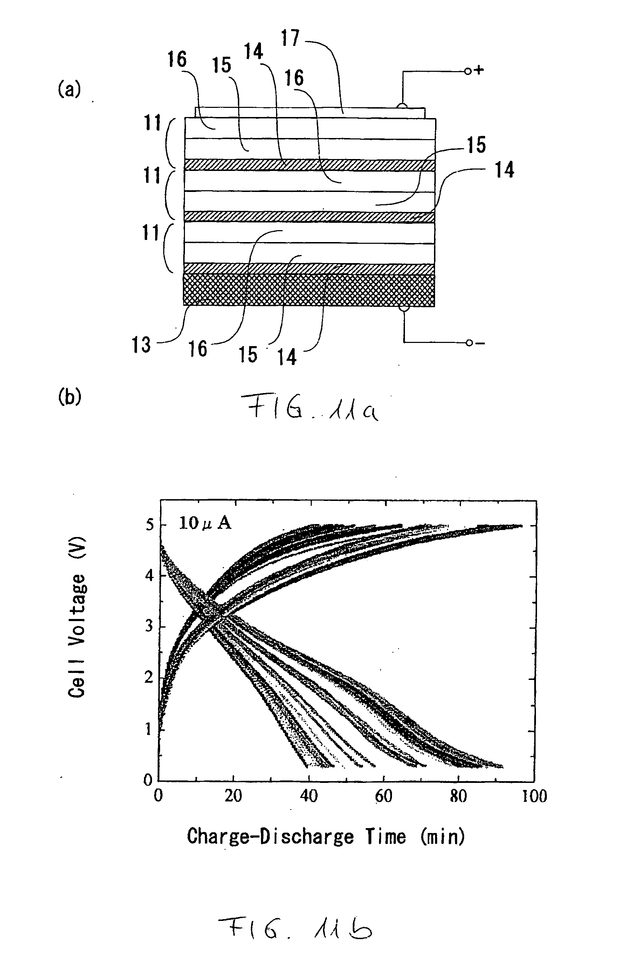

FIG. 11 (a) is a cross-sectional view of a secondary battery according to Example 2 of the invention; and FIG. 11 (b) is a graph showing the charge/discharge characteristics of the secondary batteries. In the secondary battery according to Example 2, three layers of cells are stacked in series on one side of a thin substrate.
The thin substrate, positive electrode active material layer, solid electrolyte layer, negative electrode active material layer, and collector layer are the same as those of Example 1.

### [Example 3]

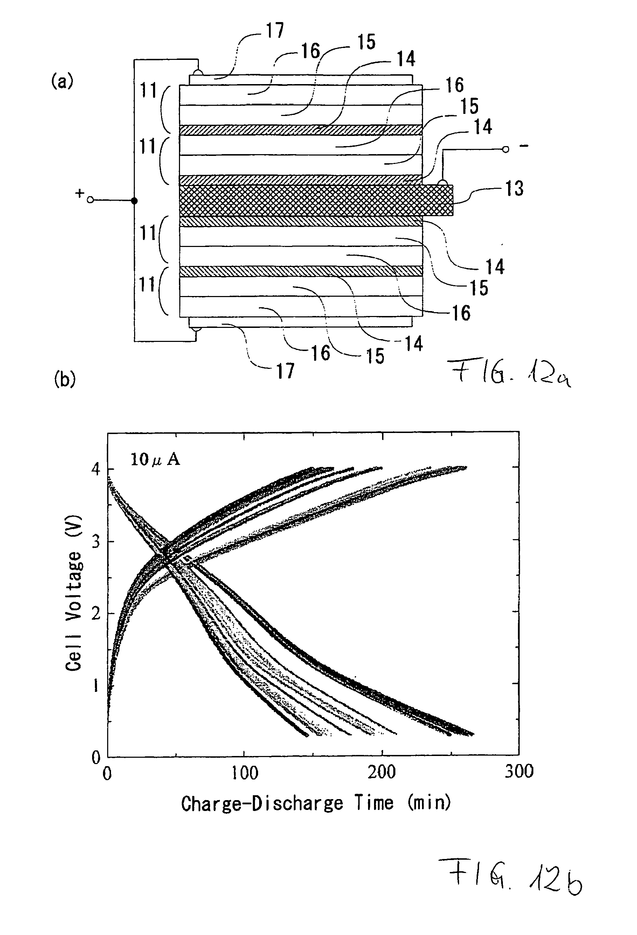

FIG. 12 (a) is a cross-sectional view of a secondary battery according to Example 3 of the invention; and FIG. 12 (b) is a graph showing the charge/discharge characteristics of the secondary batteries. In the secondary battery according to Example 3, two layers of cells are formed on each side of a thin substrate, and two sets of the stacked cells are connected in parallel.
The thin substrate, positive electrode active material layer, solid electrolyte layer, negative electrode active material layer, and collector layer are the same as those of Example 1.
The graphs of charge/discharge characteristics show that the secondary batteries of Examples 1 and 2 having two layers of cells connected in series are charged to a voltage of about 4 V, and the secondary battery of Example 2 having three layers of cells connected in series is charged to a higher voltage, i.e., about 5 V.
The graphs also show that the time until the secondary battery of Example 1 having a single set of stacked cells is discharged to 2 V is from 50 to 75 minutes, whereas the time until the secondary battery of Example 3 having two sets of stacked cells is discharged to 2 V is longer, i.e., 60 to 110 minutes, and thus exhibits a greater battery capacity.

### [Example 4]

A stainless steel foil (SUS 304, thickness: 5 µm; size: 5 x 5 cm; surface roughness RMS: 0.5 µm) was prepared first as a thin substrate and introduced into a vacuum film-formation chamber. After plasma-etching a surface of the foil, each layer was formed as follows.

### [Positive Electrode Active Material Layer]

Material: lithium manganate (Li₂₋ₓMn₂O₄); RF sputtering, target: lithium manganate (purity: 99%); RF power: 100 W; Ar gas pressure: 1.2 Pa; Ar gas flow rate: 50 sccm; film thickness: 2,700 nm (0.27 µm)

### [Solid Electrolyte Layer]

Material: lithium phosphate (Li₃PO₄); RF sputtering, target: lithium phosphate (purity: 99%); RF power: 100 W; N₂ gas pressure: 1.2 Pa; N₂ gas flow rate: 50 sccm; film thickness: 1,400 nm (0.14 µm)

### [Negative Electrode Active Material Layer]

Material: niobium pentoxide (Nb₂O₅); RF sputtering, target: niobium pentoxide (purity: 99.9%); RF power: 100 W; Ar/O₂ gas pressure: 1.2 Pa; Ar/O₂ gas flow rate: 45/5 sccm; film thickness: 1,000 nm (0.1 µm)

### [Collector Layer]

Material: vanadium (V); direct current sputtering, target: vanadium (purity: 99.9%); RF power: 60 W; Ar gas pressure: 1.2 Pa; Ar gas flow rate: 50 sccm; film thickness: 1,600 nm (0.16 µm)
Secondary batteries fabricated under the above-described conditions were measured for their charge/discharge characteristics.

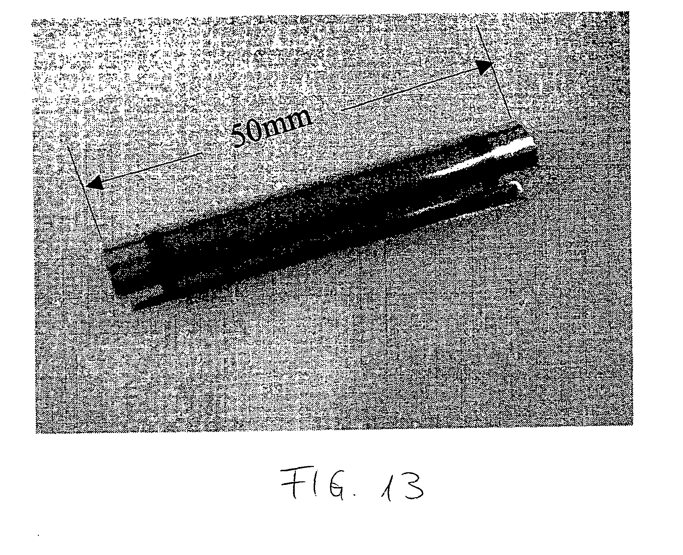

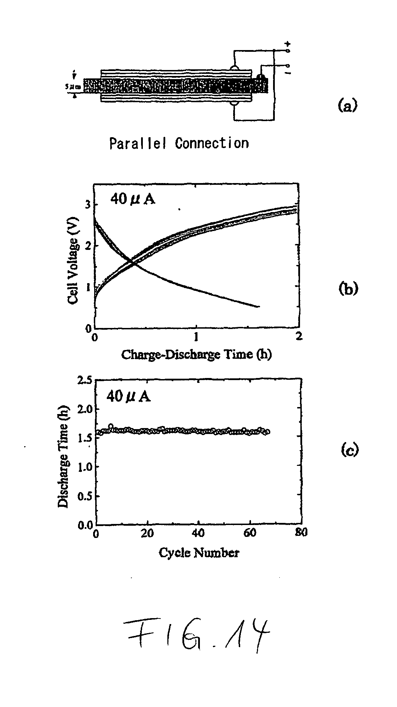

FIG. 13 shows a photograph of a secondary battery according to Example 4 of the invention, fabricated for reference by forming a cell on only one surface of a substrate of a 5 µm thick stainless steel foil under the fabrication conditions of Example 4. It can be seen that, because of a film stress in the thin-film secondary battery, the thin substrate substantially curls up into a tubular shape. FIG. 14 (a) is a cross-sectional view showing a secondary battery according to Example 4 of the invention; FIG. 14 (b) is a graph showing the charge/discharge characteristics of the secondary batteries; and FIG. 14 (c) shows the cycle characteristics of the secondary batteries. In the secondary battery of Example 4, a single layer of a cell is formed on each side of a thin substrate, and these cells are connected in parallel.
It can be seen from the graph of charge/discharge characteristics and the graph of cycle characteristics that a thin-film secondary battery can be fabricated safely even on a thin substrate with a thickness of 5 µm, and the secondary battery demonstrates good performance.
Moreover, the photograph of FIG. 13 has provided evidence for the fundamental technology for the film-formation technique according to the roll-to-roll method using an extremely thin substrate with a thickness of about 5 µm.

### [Industrial Applicability]

As described above, the secondary batteries of the present invention, a method of manufacturing the secondary batteries, and systems thereof provide good adhesion between a thin substrate and an active material that constitute a secondary battery, can achieve reductions in the thickness and weight of secondary batteries, and are useful as means for supplying electrical power to thin electric equipment such as IC cards with display devices, active RFID tags, electronic paper, and the like, and also as a manufacturing method thereof.

## Claims

1. A secondary battery comprising:
a cell comprising, in order, a positive electrode active material layer, an electrolyte layer, and a negative electrode active material layer, or a cell comprising, in order, a negative electrode active material layer, an electrolyte layer, and a positive electrode active material layer;
the cell being formed on a conductive thin substrate having a surface roughness RMS of 0.8 µm or less.

2. The secondary battery according to claim 1, wherein the surface roughness RMS of the thin substrate is from 0.1 to 0.5 µm.

3. The secondary battery according to claim 1 or 2, wherein the thin substrate is a foil made of a metal or an alloy.

4. The secondary battery according to claim 1 or 2, wherein the thin substrate is a conductive film in which an organic film is coated with a thin film of a conductive metal on both surfaces thereof.

5. The secondary battery according to any one of claims 1 to 4, wherein the thin substrate is a substrate not containing any oxide on a surface thereof.

6. The secondary battery according to any one of claims 1 to 5, wherein the thin substrate has thereon 5,000/mm² or less of deposits with a diameter of 0.15 µm or more.

7. The secondary battery according to any one of claims 1 to 6, wherein the electrolyte layer is made of a solid electrolyte.

8. The secondary battery according to claim 3, wherein the alloy is stainless steel.

9. The secondary battery according to any one of claims 1 to 8, wherein a portion or all of each of the layers is formed by a vacuum film-formation method.

10. The secondary battery according to any one of claims 1 to 9, wherein one or a plurality of cells are present on both surfaces of the thin substrate.

11. The secondary battery according to any one of claims 1 to 10, wherein the plurality of cells are stacked in series so that a negative electrode active material layer of one cell is in contact with a positive electrode active material layer of another cell.

12. The secondary battery according to claim 10, wherein a collector electrode is interposed between the plurality of cells.

13. The secondary battery according to claim 10 or 11, wherein no collector electrode is interposed between the plurality of cells.

14. A secondary battery system comprising secondary batteries as defined in any one of claims 1 to 13 stacked in parallel.

15. A secondary battery system comprising secondary batteries as defined in any one of claims 1 to 13 stacked in series.

16. The secondary battery system according to claim 14, further comprising a collector at least as an uppermost layer thereof, wherein a lead or leads are drawn out only from the thin substrate, or only from the thin substrate and the collector as an uppermost layer.

17. The secondary battery system according to claim 15, further comprising a collector at least as an uppermost layer thereof, wherein leads are drawn out only from the thin substrate as a lowermost layer and the collector as an uppermost layer.

18. The secondary battery system according to any one of claims 14 to 17, wherein an electrical contact between the thin substrate and the uppermost layer of each secondary battery is ensured via (1) a direct physical contact, (2) a conductive paste applied on one opposed surface or both surfaces thereof, or (3) a conductive sheet.

19. A method of manufacturing a secondary battery comprising forming a positive electrode active material layer, an electrolyte layer, and a negative electrode active material layer in order, or a negative electrode active material layer, an electrolyte layer, and a positive electrode active material layer in order, on a conductive thin substrate having a surface roughness RMS of 0.8 µm or less.

20. The method according to claim 19, wherein the surface roughness RMS of the thin substrate is from 0.1 to 0.5 µm.

21. The method according to claim 19 or 20, wherein the thin substrate is a foil made of a metal or an alloy.

22. The method according to claim 19 or 20, wherein the thin substrate is a conductive film in which an organic film is coated with a thin film of a conductive metal on both surfaces thereof.

23. The method according to any one of claims 19 to 22, wherein any passivation film is removed from a surface of the thin substrate prior to formation of the layers.

24. The method according to any one of claims 19 to 23, wherein the thin substrate has thereon 5,000/mm² or less of deposits with a diameter of 0.15 µm or more.

25. The method according to any one of claims 19 to 24, wherein the electrolyte layer is made of a solid electrolyte.

26. The method according to claim 21, wherein the alloy is stainless steel.

27. The method according to any one of claims 19 to 26, wherein a portion or all of each of the layers is formed by a vacuum film-formation method.

28. The method according to claim 27, wherein each layer is formed on both surfaces of the thin substrate.

29. The method according to any one of claims 19 to 28, wherein each layer is formed while multiple slices of the thin substrate cut into a desired shape are being delivered continuously or intermittently in a belt-conveyor manner.

30. The method according to any one of claims 19 to 28, wherein each layer is formed while the thin substrate wound into a roll is being delivered continuously or intermittently by roll-to-roll processing.

31. The method according to any one of claims 19 to 28, wherein each layer is formed simultaneously on both surfaces of the thin substrate while the thin substrate wound into a roll is being delivered continuously or intermittently by roll-to-roll processing.
